# EUROPÄISCHE PATENTSCHRIFT

(11) **EP 3 029 435 B1**
(45) Veröffentlichungstag und Bekanntmachung des Hinweises auf die Patenterteilung: **28.02.2018**
(21) Anmeldenummer: 14195671.4
(22) Anmeldetag: 01.12.2014
(51) Int. Cl.: G01G 19/02

(54) **Kraftsensorvorrichtung zum Erfassen eines Fahrzeuggewichts**
Force sensor for detecting the weight of a vehicle
Dispositif de capteur de force destiné à l'enregistrement du poids d'un véhicule

(43) Veröffentlichungstag der Anmeldung: 08.06.2016
(73) Patentinhaber: HAENNI Instruments AG, 3422 Kirchberg (CH)
(72) Erfinder: Kneubühl, Daniel, 3210 Kerzers (CH); Maurer, Christian, 3018 Bern (CH)
(74) Vertreter: Strauss, Steffen

(56) Entgegenhaltungen:
- WO-A1-01/27569
- WO-A1-02/23504

## Beschreibung

Die vorliegende Erfindung betrifft eine Kraftsensorvorrichtung, insbesondere für die Erfassung eines Fahrzeuggewichts, und eine Streifensensorvorrichtung mit einer derartigen Kraftsensorvorrichtung.

Kraftsensoren werden heutzutage hauptsächlich in Radlastwaagen verwendet. Mehrere Sensoren werden rasterförmig in ein metallisches Schutzorgan verpackt und für den Schutz gegen Umwelteinflüsse abgedichtet, da die Gehäuse der Radlastwaagen aus messtechnischen Gründen nicht genügend dicht realisiert werden können.

Aus der Druckschrift WO 02 235 04 A1 sind WIM (Weight in Motion) - Sensoren bekannt, die in einem Überwachungs- und Führungssystem für Verkehrsströme in Tunneln Verwendung finden. Die WIM - Sensoren sind in Abständen von beispielsweise 250 Meter bis 500 Meter vor und innerhalb der Tunnelstrecke in der Fahrbahnoberfläche verlegt und mit einer Recheneinheit verbunden.

In der Druckschrift WO 01 275 69 A1 ist ebenfalls einen WIM ("Weigh-in-Motion") - Sensor zur Erfassung eines Fahrzeuggewichts mit einer Lasterfassungseinrichtung beschrieben. Die Lasterfassungseinrichtung besteht aus einem U-förmigen oder zylindrischen Grundkörper in den ein Dehnmessstreifen oder eine optische Faser eingelegt ist.

Die Kraftsensoren sind meistens als Aluminium-Hohlprofile und mit mehreren Quarzsensoren oder Dehnmesstreifen-Messelementen (DMS) ausgeführt. Diese Varianten haben den Nachteil, dass sie stark biege- und torsionsempfindlich sind. Bei Überbelastung können sogar Schäden an den Sensoren auftreten. Zudem ist die Realisierung eines Sensorelementes durch die Vielzahl der Sensoren sehr aufwendig.

Es ist die Aufgabe der vorliegenden Erfindung, einen einfachen und robusten Aufbau für einen Streifensensor zu schaffen. Insbesondere soll der Streifensensor aus einem Hohlprofil und Kraftsensoren aufgebaut sein.

Diese Aufgabe wird durch die Merkmale der unabhängigen Ansprüche gelöst. Vorteilhafte Weiterbildungsformen sind Gegenstand der abhängigen Ansprüche.

Die Erfindung basiert auf der Idee, Kraftsensoren zum Aufbau von Streifensensoren zu verwenden. Solche werden insbesondere für WIM - Anwendungen (Weigh In Motion, dynamische Verwiegung) verwendet. Diese sind meistens als Aluminium-Hohlprofile und mit mehreren Quarzsensoren oder Dehnmesstreifen-Messelementen (DMS) ausgeführt.

Ein im Folgenden beschriebenes Montage-und Krafteinleitungselement bzw. Kraftsensorvorrichtung umfasst eine schmale Grundplatte und wechselseitig angeordnete dünne Rohre, die als Träger für die Kraftsensoren verwendet werden können. Durch die Variation der Anzahl der Rohre und deren Länge können beliebige Ausführungsvarianten realisiert werden. Das Messelement bzw. das Montage-und Krafteinleitungselement kann durch Vormontage einfach in ein Hohlprofil eingefügt werden und muss nicht wie bei gängiger Technologie starr fixiert werden. Eine schwimmende Lagerung des Messelementes macht es unempfindlicher gegen Schock-, Biege- und Torsionsbelastungen. Ein Streifensensor mit dem Montage- und Krafteinleitungselement kann eine stetig zu- und abnehmende Empfindlichkeit in Fahrtrichtung aufweisen. Elastische Randzonen des Streifensensors können die Messzone entkoppeln und Differenzialspannungen beim Einbau in Bodenbeläge ausgleichen.

Derartige Streifensensoren haben den Vorteil, dass diese nicht oder kaum biege- und torsionsempfindlich sind. Selbst bei Überbelastung treten keine Schäden an den Sensoren auf. Die Realisierung eines Streifensensors ist damit sehr einfach ausführbar. Der Streifensensor kann sowohl als mobile Lösung auf dem (Straßen-) Belag liegend oder als stationäre Ausführung im Belag eingebaut werden.

Gemäß einem ersten Aspekt betrifft die Erfindung eine Kraftsensorvorrichtung für die Erfassung eines Fahrzeuggewichts, mit: einer längsgestreckten Sensoraufnahme; und einer Mehrzahl von in der längsgestreckten Sensoraufnahme teilweise überlappend angeordneten Hohlprofilen, wobei in jedem Hohlprofil ein Kraftstreifensensor angeordnet ist.

Dies hat den Vorteil, dass eine solche Kraftsensorvorrichtung einfach und robust aufgebaut werden kann.

Gemäß einer Ausführungsform der Kraftsensorvorrichtung erstrecken die überlappend angeordneten Hohlprofile sich in eine Erstreckungsrichtung der längsgestreckten Sensoraufnahme.

Dies hat den Vorteil, dass aufgrund der überlappenden Anordnung beliebige Längen realisiert werden können.

Gemäß einer Ausführungsform der Kraftsensorvorrichtung ist eine Empfindlichkeit der Kraftstreifensensoren entlang der Erstreckungsrichtung der längsgestreckten Sensoraufnahme näherungsweise konstant.

Dies hat den Vorteil, dass die Gewichtsanzeige stets gleich ist unabhängig davon, an welcher Stelle ein Fahrzeug über die Kraftsensorvorrichtung fährt.

Gemäß einer Ausführungsform der Kraftsensorvorrichtung ist eine Empfindlichkeit der Kraftstreifensensoren in radialer Richtung der längsgestreckten Sensoraufnahme ungleichförmig.

Dies hat den Vorteil, dass der Auffahrvorgang auf die Kraftsensorvorrichtung anders gewichtet werden kann als der Zustand, in dem sich das Fahrzeug mit beiden Rädern direkt über der Kraftsensorvorrichtung befindet. Damit kann die Kraftsensorvorrichtung eine genauere Gewichtsbestimmung vornehmen.

Gemäß einer Ausführungsform der Kraftsensorvorrichtung nimmt die Empfindlichkeit der Kraftstreifensensoren in der radialen Richtung der längsgestreckten Sensoraufnahme von einer Mittenposition zu einer Randposition stetig ab.

Dies hat den Vorteil, dass der Vorgang des Auffahrens von der Randposition zu der Mittenposition und der Vorgang des Wegfahrens von der Mittenposition zu der Randposition geringer gewichtet werden kann als der Zustand, in dem sich das Fahrzeug direkt in der Mittenposition der Kraftsensorvorrichtung befindet. Damit kann die Kraftsensorvorrichtung eine genauere Gewichtsbestimmung vornehmen.

Gemäß einer Ausführungsform der Kraftsensorvorrichtung sind die Kraftstreifensensoren in die Hohlprofile eingelegt oder eingeklebt.

Dies hat den Vorteil, dass die Kraftstreifensensoren sich verschieben können oder sich zumindest flexibel ausdehnen können, so dass es bei starker Belastung zu keiner Beschädigung der Kraftstreifensensoren kommt.

Gemäß einer Ausführungsform der Kraftsensorvorrichtung weist die Mehrzahl von überlappend angeordneten Hohlprofilen ein erstes Hohlprofil, ein zweites Hohlprofil und ein drittes Hohlprofil auf, wobei das erste Hohlprofil und das zweite Hohlprofil voneinander beabstandet in Reihe angeordnet sind, und wobei das dritte Hohlprofil seitlich neben dem ersten Hohlprofil und dem zweiten Hohlprofil angeordnet ist und teilweise das erste Hohlprofil und das zweite Hohlprofil überlappt.

Dies hat den Vorteil, dass mit einer solchen Anordnung beliebige Längen der Kraftsensorvorrichtung realisiert werden können, so dass diese in unterschiedlich breite Fahrbahnen eingebaut werden kann.

Gemäß einer Ausführungsform der Kraftsensorvorrichtung weisen die Hohlprofile jeweils an beiden Hohlprofilenden Anschlussschnittstellen für einen elektrischen Anschluss der Kraftstreifensensoren auf.

Dies hat den Vorteil, dass die Kraftstreifensensoren untereinander gekoppelt werden können.

Gemäß einer Ausführungsform der Kraftsensorvorrichtung sind die Kraftstreifensensoren elektrisch in Reihe oder parallel verbunden.

Dies hat den Vorteil, dass viele kurze Kraftstreifensensoren zu einem langen Kraftstreifensensor verbunden werden können, so dass Herstellungskosten niedrig gehalten werden können. Ferner sind kurze Kraftstreifensensoren leichter zu fertigen, da sie weniger empfindlich gegenüber Biege- und Torsionsbeanspruchung sowie weiteren bei der Fertigung auftretenden Belastungen sind.

Gemäß einer Ausführungsform der Kraftsensorvorrichtung sind Hohlprofile durch Rohre, insbesondere durch dünnwandige Rohre, mit einem Kreisquerschnitt oder mit einem viereckigen Querschnitt gebildet.

Dies hat den Vorteil, dass die Hohlprofile leicht und kostengünstig hergestellt werden können.

Gemäß einem zweiten Aspekt betrifft die Erfindung eine Streifensensorvorrichtung, mit: einem längsgestreckten Hohlprofilgehäuse; und zumindest einer in dem Hohlprofilgehäuse angeordneten Kraftsensorvorrichtung gemäß dem ersten Aspekt der Erfindung oder einer seiner Ausführungsformen.

Dies hat den Vorteil, dass eine solche Streifensensorvorrichtung einfach und robust aufgebaut werden kann. Der Aufbau mit einem Hohlprofilgehäuse und darin integrierten Kraftsensoren eignet sich besonders für den Einbau in den Fahrbahnbelag einer Strasse.

Gemäß einer Ausführungsform der Streifensensorvorrichtung erstreckt sich die längsgestreckte Sensoraufnahme der zumindest einen Kraftsensorvorrichtung entlang einer Längsrichtung des Hohlprofilgehäuses.

Dies hat den Vorteil, dass das Hohlprofilgehäuse quer zur Fahrbahn in die Fahrbahn eingebaut werden kann und die Streifensensorvorrichtung somit zuverlässig das Gewicht der darüberfahrenden Fahrzeuge messen kann.

Gemäß einer Ausführungsform umfasst die Streifensensorvorrichtung ein entlang der Längsrichtung des Hohlprofilgehäuses in dem Hohlprofilgehäuse angeordnetes Führungselement, wobei die zumindest eine Kraftsensorvorrichtung in dem Führungselement verschiebbar gelagert ist.

Dies hat den Vorteil, dass die Kraftsensorvorrichtung leicht in das Führungselement eingebracht werden kann und unempfindliche gegenüber mechanischen Belastungen ist.

Gemäß einer Ausführungsform der Streifensensorvorrichtung weist das Hohlprofilgehäuse elastische Randzonen auf.

Dies hat den Vorteil, dass die Streifensensorvorrichtung schwingend in die Fahrbahn eingebaut werden kann und somit mechanische Belastungen aufgrund der elastischen Randzonen leicht ausgleichen kann.

Gemäß einer Ausführungsform der Streifensensorvorrichtung weisen die elastischen Randzonen des Hohlprofilgehäuses sinusförmige, U-förmige oder rechteckige Dehnungsfugen auf.

Dies hat den Vorteil, dass solche Dehnungsfugen leicht herstellbar sind.

Weitere Ausführungsbeispiele werden Bezug nehmend auf die beiliegenden Zeichnungen erläutert. Es zeigen:
- Fig. 1: eine schematische Darstellung einer Streifensensorvorrichtung 100 gemäß einer Ausführungsform;
- Fig. 2: eine schematische Darstellung einer Kraftsensorvorrichtung 200 gemäß einer Ausführungsform;
- Fig. 3: eine schematische Darstellung eines Systemaufbaus 300 gemäß einer Ausführungsform;
- Fig. 4: ein beispielhaftes Diagramm 400, das eine Empfindlichkeit S der Kraftsensorvorrichtung 200 über der Position P darstellt;
- Fig. 5a/b: eine schematische Darstellung eines Hohlprofilendes 500a, 500b im Schnitt (Fig. 5a) und in Draufsicht (Fig. 5b) gemäß einer Ausführungsform;
- Fig. 6a: eine schematische Darstellung der Randzone 600a des Hohlprofilgehäuses 4 gemäß einer ersten Variante;
- Fig. 6b: eine schematische Darstellung der Randzone 600b des Hohlprofilgehäuses 4 gemäß einer zweiten Variante; und
- Fig. 6c: eine schematische Darstellung der Randzone 600c des Hohlprofilgehäuses 4 gemäß einer dritten Variante.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

Die im Folgenden beschriebenen Vorrichtungen und Systeme können in WIM-Anwendungen eingesetzt werden. Im Fokus der dynamischen Verwiegung (Weigh In Motion) von Fahrzeugen steht die Sicherheit der Verkehrsteilnehmer, die Einhaltung der gesetzlichen Vorschriften als auch der Schutz und der langfristige Erhalt der Verkehrsinfrastruktur. Mittels in der Fahrbahn eingebauter Achslastsensoren und Induktivschleifen werden Einzelfahrzeugdaten erfasst, die u.a. Rad-, Achs-, Achsgruppen- und Gesamtgewichte enthalten. Diese Informationen sind in Zeiten alternder und dringend zu modernisierender Straßen- und Brückenbauwerke Voraussetzung für Hochrechnungen, um die derzeitigen aber auch die zukünftig zu erwartenden Verkehrsströme und Gewichtsbelastungen zu erfassen bzw. diesen präventiv zu begegnen.

Die im Folgenden beschriebenen Vorrichtungen und Systeme umfassen Kraftsensoren und Kraftstreifensensoren, d.h. streifenförmige Kraftsensoren. Mit einem Kraftaufnehmer bzw. Kraftsensor wird eine Kraft gemessen, die auf den Sensor wirkt. Meist können durch elastische Verformung sowohl Zug- als auch Druckkräfte gemessen werden. Anwendungen sind neben der Kraftmessung auch Wiegen und Bestimmung von Drehmomenten. Die im Folgenden beschriebenen Kraftsensoren können Piezokeramik-Elemente aufweisen, bei denen durch Krafteinwirkung eine Ladungsverteilung entsteht, die proportional zur Kraft ist. Die im Folgenden beschriebenen Kraftsensoren können piezoelektrische Kristalle umfassen, mit denen Kräfte, Drücke, Beschleunigungen, Dehnungen und Momente gemessen werden können. Die im Folgenden beschriebenen Kraftsensoren können als piezoelektrische Kraftsensoren ausgeführt sein, beispielsweise mit einem Messelement mit mindestens zwei piezoelektrischen Kristallen mit Transversaleffekt zum Messen von axial angreifenden Kräften und/oder Drücken.

Die im Folgenden beschriebenen Vorrichtungen und Systeme umfassen Streifensensoren. Ein Streifensensor ist ein Streifen, der einen oder mehrere Sensoren, beispielsweise Kraft- oder Drucksensoren, umfasst. Die im Folgenden beschriebenen Streifensensoren eignen sich dazu, in den Belag einer Fahrbahn eingebaut zu werden und die auf den Belag wirkende Kraft eines darüberfahrenden Fahrzeugs zu erfassen. Der Streifensensor kann als eine Wiegeplatte ausgeführt sein, die in einen Rahmen eingespannt sein kann, wobei die eingespannte Wiegeplatte auf einen Kraftsensor wirkt, der unterhalb der Wiegeplatte in einem Gehäuse eingebettet sein kann. Das Gehäuse kann den Rahmen, die Wiegeplatte, den Kraftsensor und eine Bodenplatte luftdicht umschließen und mit einem Druck übertragenden Medium gefüllt sein.

Die in dieser Offenbarung beschriebenen Streifensensoren, Kraftsensoren und Kraftstreifensensoren können beispielsweise so ausgeführt sein, wie die in den Druckschriften WO 2013 / 056381 A1, WO 2013 / 071452 A1 und EP 1 019 684 B1 näher beschriebenen Sensoren.

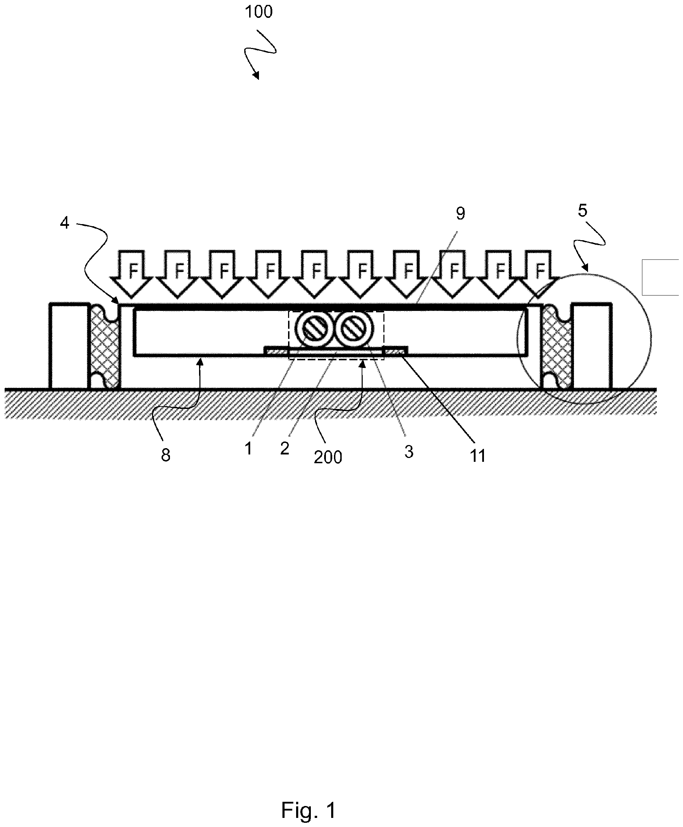

Fig. 1 zeigt eine schematische Darstellung einer Streifensensorvorrichtung 100 gemäß einer Ausführungsform.

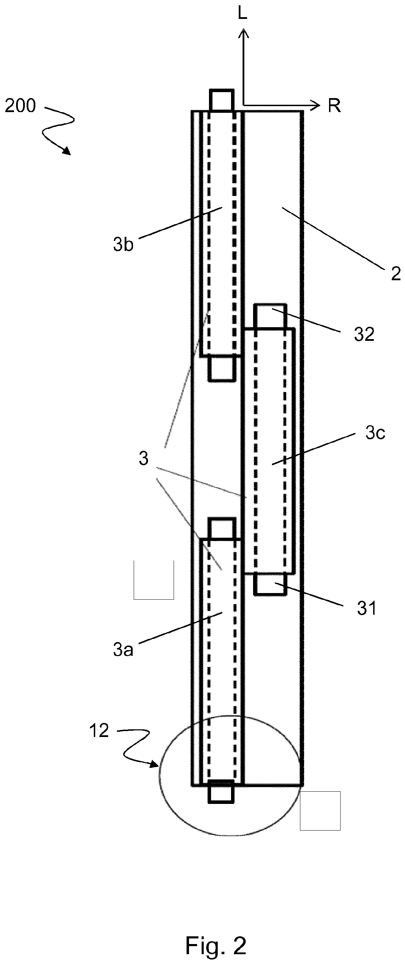

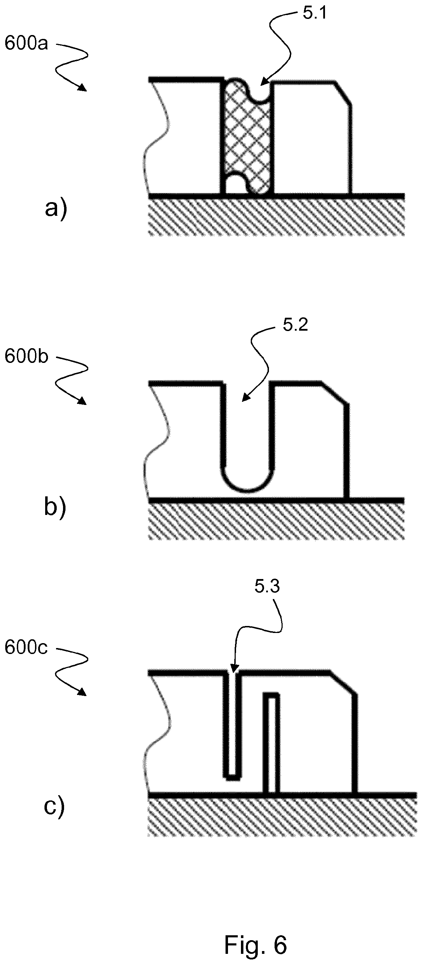

Die Streifensensorvorrichtung 100 umfasst ein längsgestrecktes Hohlprofilgehäuse 4 und eine in dem Hohlprofilgehäuse 4 angeordnete Kraftsensorvorrichtung 200, die unten zu Fig. 2 näher beschrieben ist. Eine längsgestreckte Sensoraufnahme 2 der Kraftsensorvorrichtung 200 kann sich entlang einer Längsrichtung des Hohlprofilgehäuses 4 erstrecken. Die Streifensensorvorrichtung 100 kann ein entlang der Längsrichtung des Hohlprofilgehäuses 4 in dem Hohlprofilgehäuse 4 angeordnetes Führungselement 8 umfassen, das die Kraftsensorvorrichtung 200 aufnehmen kann. Die Kraftsensorvorrichtung 200 kann in dem Führungselement 8 verschiebbar gelagert sein. Das Hohlprofilgehäuse 4 kann elastische Randzonen 5 aufweisen, beispielsweise derartige Randzonen 5, wie in den Figuren 6a bis 6c näher beschrieben.

Das Hohlprofilgehäuse 4 der Streifensensorvorrichtung 100 kann auch mehrere Kraftsensorvorrichtungen 200 aufnehmen.

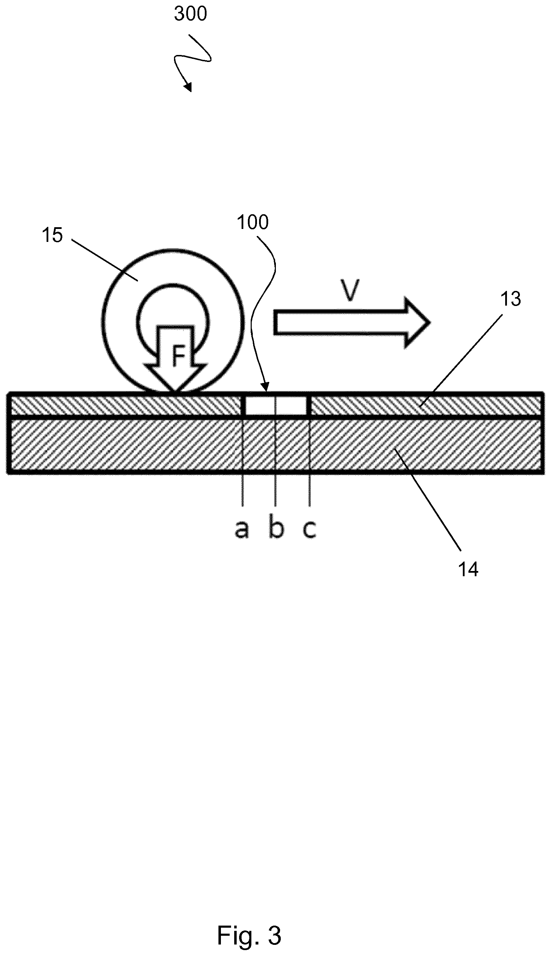

Die Streifensensorvorrichtung 100 kann in den Belag einer Fahrbahn eingebaut sein, beispielsweise wie unten zu Fig. 3 beschrieben, und kann die auf den Belag wirkende Kraft eines darüberfahrenden Fahrzeugs erfassen.

Das Führungselement 8 kann als ein Rahmen ausgebildet sein, der eine Wiegeplatte 9 einspannt, welche die Messzone bildet. Die Kraftsensorvorrichtung 200 kann auf Führungsschienen 11 in den Rahmen eingelegt oder eingeschoben werden und im eingeschobenen Zustand unter der Wiegeplatte 9 liegen, so dass das Gewicht eines über die Wiegeplatte 9 fahrenden Fahrzeugs von der Kraftsensorvorrichtung 200 aufgenommen werden kann. Der Rahmen kann beispielsweise an einer Seite offen sein, um die Kraftsensorvorrichtung 200 von dieser Seite aus in den Rahmen zu schieben. Die Wiegeanordnung aus Kraftsensorvorrichtung 200, Wiegeplatte 9 und Rahmen bzw. Führungselement 8 mit Führungsschienen 11 kann von dem Hohlprofilgehäuse 4 luft- und feuchtigkeitsdicht umschlossen sein, so dass die Streifensensorvorrichtung 100 keinen schädlichen Umwelteinflüssen ausgesetzt ist. Das Hohlprofilgehäuse 4 kann ferner mit einem Druck übertragenden Medium gefüllt sein. Das Hohlprofilgehäuse 4 kann beispielsweise aus Aluminium oder einem anderen Leichtmetall oder aus Kunststoff bestehen.

Fig. 2 zeigt eine schematische Darstellung einer Kraftsensorvorrichtung 200 für die Erfassung eines Fahrzeuggewichts gemäß einer Ausführungsform. Die Kraftsensorvorrichtung umfasst eine längsgestreckte Sensoraufnahme 2 und eine Mehrzahl von in der längsgestreckten Sensoraufnahme 2 teilweise überlappend angeordneten Hohlprofilen 3, wobei in jedem Hohlprofil 3 ein Kraftstreifensensor 1 angeordnet ist.

Die überlappend angeordneten Hohlprofile 3 können sich in eine Erstreckungsrichtung L der längsgestreckten Sensoraufnahme 2 erstrecken. Eine Empfindlichkeit der Kraftstreifensensoren 1 entlang der Erstreckungsrichtung L der längsgestreckten Sensoraufnahme 2 kann näherungsweise konstant sein. Eine Empfindlichkeit der Kraftstreifensensoren 1 in radialer Richtung R der längsgestreckten Sensoraufnahme 2 kann dagegen ungleichförmig sein. Die Empfindlichkeit der Kraftstreifensensoren 1 in der radialen Richtung R kann von einer Mittenposition, d.h. einer Position auf der in Fig. 2 eingezeichneten Längsachse L zu einer Randposition, d.h. in Richtung oder entgegen der Richtung der in Figur 2 radialen Richtung R, abnehmen, insbesondere stetig abnehmen. Ein beispielhafter Empfindlichkeitsverlauf ist in Fig. 3 näher dargestellt. Die Kraftstreifensensoren 1 können beispielsweise in die Hohlprofile 3 eingelegt, eingeschoben oder eingeklebt sein.

Wie in Fig. 2 dargestellt, kann die Mehrzahl der überlappend angeordneten Hohlprofile 3 ein erstes Hohlprofil 3a, ein zweites Hohlprofil 3b und ein drittes Hohlprofil 3c aufweisen. Das erste Hohlprofil 3a und das zweite Hohlprofil 3b können voneinander beabstandet in Reihe angeordnet sein. Das dritte Hohlprofil 3c kann seitlich neben dem ersten Hohlprofil 3a und dem zweiten Hohlprofil 3b angeordnet sein und teilweise das erste Hohlprofil 3a und das zweite Hohlprofil 3b überlappen.

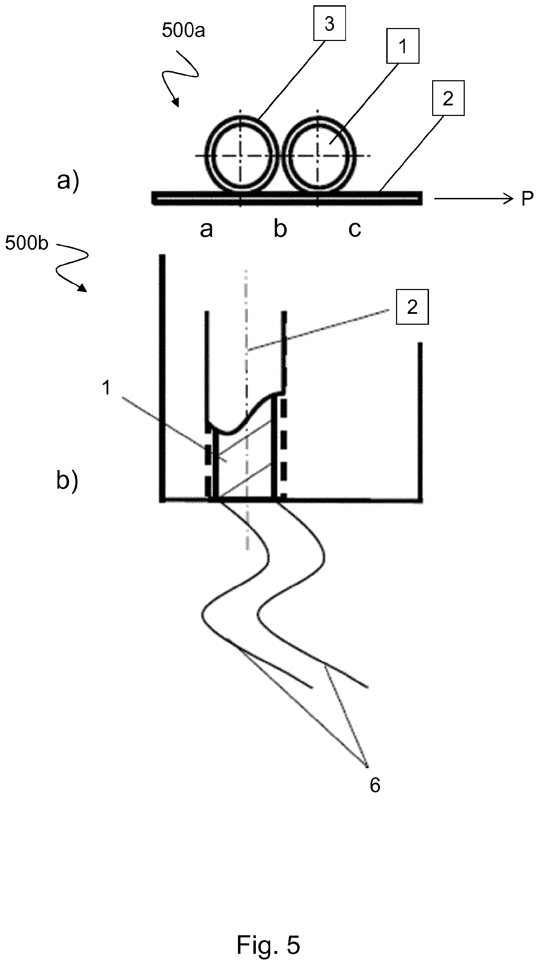

Die Hohlprofile 3 können jeweils an beiden Hohlprofilenden 31, 32 Anschlussschnittstellen 6 für einen elektrischen Anschluss der Kraftstreifensensoren 1 aufweisen, wie beispielsweise in Fig. 5 näher dargestellt. Die Kraftstreifensensoren 1 können elektrisch in Reihe verbunden sein.

Die Hohlprofile 3 können beispielsweise durch Rohre, insbesondere durch dünnwandige Rohre, mit einem Kreisquerschnitt oder mit einem viereckigen Querschnitt gebildet sein. Die Rohre können beispielsweise aus Aluminium oder Kunststoff bestehen.

Die Kraftsensorvorrichtung 200 stellt ein neuartiges Montage-und Krafteinleitungselement dar, das die Kraftsensoren 1 in Position hält und gleichzeitig die Krafteinleitungspositionen definiert. Das Element kann eine Grundplatte 2 und einzelne, dünne Rohre 3 umfassen, in die die Kraftsensoren 1 eingeklebt sein können. Die Überlappungen der Rohre 3 können so gewählt sein, dass die Empfindlichkeit an den Stellen, wo sich die Übergänge der zwei Kraftsensoren befinden, konstant bleibt. Durch die wechselseitige Anordnung der Rohre 3 können beliebige Ausführungslängen der Streifensensoren realisiert werden. Durch die Vormontage der Sensoren auf das Montage-und Krafteinleitungselement kann das gesamte Messelement einfach in das Hohlprofil eingeführt werden. Das Messelement muss somit nicht starr an das Hohlprofil fixiert sein, wie es bei herkömmlichen Produkten der Fall ist. Das Messelement kann längs des Profils geführt sein, muss jedoch nicht gehalten werden. Bei Biege- und Torsionsbelastungen entstehen somit keine hohen Kräfte auf das Element und es kann die Relativ-Verschiebungen durch Rutschen kompensieren. Dies macht das Element zusätzlich unempfindlicher gegen Schockbelastungen.

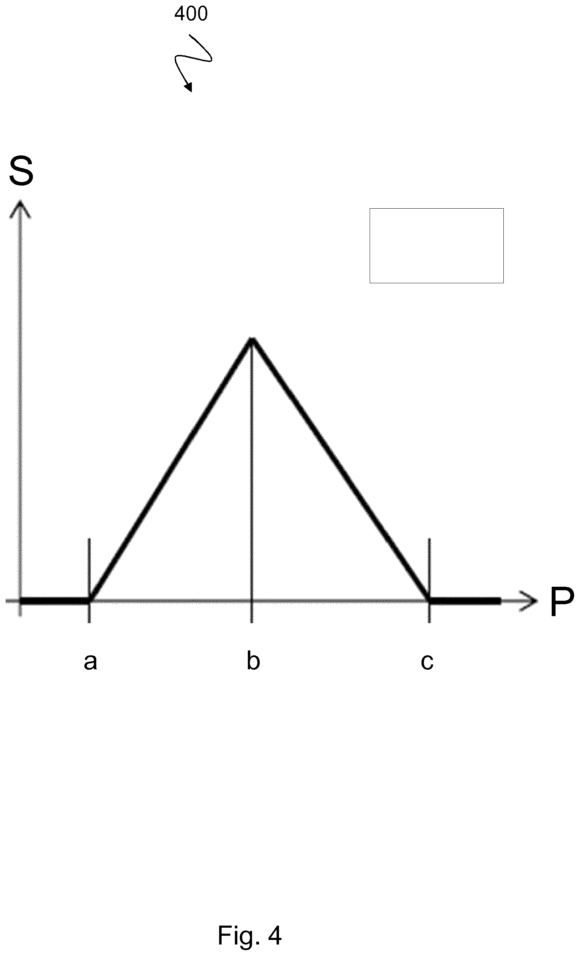

Der Streifensensor unterscheidet sich gegenüber gängigen Lösungen ferner dadurch, dass die Empfindlichkeit nicht über die ganze Auflagebreite (in Fahrtrichtung) gleichförmig sein muss, wie in Fig. 4 näher dargestellt. Zudem kann das Hohlprofil an den Randzonen elastisch sein, um einerseits die Temperatur-Spannungen durch Differenzialdehnungen bei Einbau in den Boden zu kompensieren und anderseits bei mobiler Verwendung Effekte beim Auffahren von der Messzone 9 zu entkoppeln. Die Elastizität kann durch metallische, flexible Lenker oder Gummi, Elastomer oder Kunststoff-Teilstücke realisiert sein, wie in Figur 6 näher beschrieben.

Fig. 3 zeigt eine schematische Darstellung eines Systemaufbaus 300 mit einer Streifensensorvorrichtung 100 gemäß einer Ausführungsform. Die Streifensensorvorrichtung 100 kann in den Fahrbahnbelag 13 bzw. die erste Deckschicht eines Strassenbelags einer Fahrbahn oder Strasse 14 eingebaut sein, so dass sie mit dem Fahrbahnbelag 13 eine ebene Oberfläche bildet, über welche Fahrzeuge fahren können.

Die Fahrzeuge sind hier durch ein Fahrzeugrad 15 angedeutet, das mit einer Geschwindigkeit V und einer Radlast F über den Fahrbahnbelag 13 der Fahrbahn 14 fährt, so dass von der Streifensensorvorrichtung 100 das Gewicht oder Teilgewicht des Fahrzeugs gemessen werden kann.

Fig. 4 zeigt ein beispielhaftes Diagramm 400, das eine Empfindlichkeit S der Kraftsensorvorrichtung 200 über der Position P darstellt.

Die Empfindlichkeit S kann von der Position P, die entlang der in Figur 2 dargestellten radialen Richtung R angezeigt wird, abhängig sein. Beispielsweise kann sich ein Empfindlichkeitsprofil mit den Wendepunkten a, b und c ergeben, wie in Fig. 4 dargestellt.

Das Profil kann von Punkt a zu Punkt b stetig, insbesondere linear, zunehmen und von Punkt b zu Punkt c stetig, insbesondere linear, abnehmen. Neben einem Dreiecksprofil, wie in Fig. 4 dargestellt, sind auch andere Empfindlichkeitsprofile möglich, beispielsweise sinusartig, glockenförmig, gezackt oder auch rechteckig.

Fig. 5a/b zeigt eine schematische Darstellung eines Hohlprofilendes 500a, 500b im Schnitt (Fig. 5a) und in Draufsicht (Fig. 5b) gemäß einer Ausführungsform.

Fig. 5a zeigt eine vergrößerte Darstellung des in Fig. 2 dargestellten Randbereichs 12 der Kraftsensorvorrichtung 200 in Schnittdarstellung. Auf der längsgestreckten Sensoraufnahme 2 bzw. Bodenplatte sind die darauf angeordneten Hohlprofile 3 zu sehen, in denen jeweils ein Kraftstreifensensor 1 angeordnet ist. Aufgrund der Schnittdarstellung sind nur zwei Hohlprofile 3 zu sehen, welche versetzt zueinander auf der Bodenplatte 2 angebracht sind.

Fig. 5b zeigt eine vergrößerte Darstellung des in Fig. 2 dargestellten Randbereichs 12 der Kraftsensorvorrichtung 200 in Draufsicht. Die Hohlprofile 3 weisen jeweils an beiden Hohlprofilenden Anschlussschnittstellen 6 für einen elektrischen Anschluss der Kraftstreifensensoren 1 auf. Die Kraftstreifensensoren 1 können mit den Anschlussschnittstellen 6 elektrisch in Reihe verbunden werden.

Fig. 6a zeigt eine schematische Darstellung der Randzone 600a des Hohlprofilgehäuses 4 gemäß einer ersten Variante. Die Randzone 600a ist eine Ausführungsvariante der in Fig. 1 dargestellten Randzone 5 der Streifensensorvorrichtung 100. Die Randzone 600a kann einen beispielsweise metallischen, flexiblen Lenker umfassen oder als Gummi, Elastomer oder Kunststoff-Teilstücke realisiert sein. Die Randzone 600a kann eine oder mehrere sinusförmige Dehnungsfugen 5.1 umfassen, welche für die erforderliche Elastizität sorgen.

Fig. 6b zeigt eine schematische Darstellung der Randzone 600b des Hohlprofilgehäuses 4 gemäß einer zweiten Variante. Die Randzone 600b ist eine Ausführungsvariante der in Fig. 1 dargestellten Randzone 5 der Streifensensorvorrichtung 100. Die Randzone 600b kann einen beispielsweise metallischen, flexiblen Lenker umfassen oder als Gummi, Elastomer oder Kunststoff-Teilstücke realisiert sein. Die Randzone 600b kann eine oder mehrere U-förmige Dehnungsfugen 5.2 umfassen, welche für die erforderliche Elastizität sorgen.

Fig. 6c zeigt eine schematische Darstellung der Randzone 600c des Hohlprofilgehäuses 4 gemäß einer dritten Variante. Die Randzone 600c ist eine Ausführungsvariante der in Fig. 1 dargestellten Randzone 5 der Streifensensorvorrichtung 100. Die Randzone 600c kann einen beispielsweise metallischen, flexiblen Lenker umfassen oder als Gummi, Elastomer oder Kunststoff-Teilstücke realisiert sein. Die Randzone 600c kann eine oder mehrere rechteckförmige Dehnungsfugen 5.3 umfassen, welche für die erforderliche Elastizität sorgen. Auch eine Kombination von Dehnungsfugen verschiedener Gestalt ist möglich, beispielsweise solcher mit sinusförmiger Gestalt, U-förmiger Gestalt und rechteckförmiger Gestalt.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch es ist offensichtlich dass die Erfindung durch die Ansprüche definiert ist.

## Patentansprüche

1. Kraftsensorvorrichtung (200) für die Erfassung eines Fahrzeuggewichts, mit einer längsgestreckten Sensoraufnahme (2); und
einer Mehrzahl von in der längsgestreckten Sensoraufnahme (2) überlappend angeordneten Hohlprofilen (3),
wobei in jedem Hohlprofil (3) ein Kraftstreifensensor (1) angeordnet ist und die überlappend angeordneten Hohlprofile (3) sich in eine Erstreckungsrichtung (L) der längsgestreckten Sensoraufnahme (2) erstrecken **gekennzeichnet dadurch dass** die Hohlprofilen sich teilweise überlappen.

2. Kraftsensorvorrichtung (200) nach Anspruch 1,
wobei eine Empfindlichkeit der Kraftstreifensensoren (1) entlang der Erstreckungsrichtung (L) der längsgestreckten Sensoraufnahme (2) näherungsweise konstant ist.

3. Kraftsensorvorrichtung (200) nach Anspruch 1 oder 2,
wobei eine Empfindlichkeit der Kraftstreifensensoren (1) in radialer Richtung (R) der längsgestreckten Sensoraufnahme (2) ungleichförmig ist.

4. Kraftsensorvorrichtung (200) nach Anspruch 3,
wobei die Empfindlichkeit der Kraftstreifensensoren (1) in der radialen Richtung (R) der längsgestreckten Sensoraufnahme (2) von einer Mittenposition (b) zu einer Randposition (a, c) stetig abnimmt.

5. Kraftsensorvorrichtung (200) nach einem der vorstehenden Ansprüche,
wobei die Kraftstreifensensoren (1) in die Hohlprofile (3) eingelegt und durch Kraft- oder Formschluss gehalten werden.

6. Kraftsensorvorrichtung (200) nach einem der vorstehenden Ansprüche, wobei die Mehrzahl von überlappend angeordneten Hohlprofilen (3) ein erstes Hohlprofil (3a), ein zweites Hohlprofil (3b) und ein drittes Hohlprofil (3c) aufweist,
wobei das erste Hohlprofil (3a) und das zweite Hohlprofil (3b) voneinander beabstandet in Reihe angeordnet sind, und
wobei das dritte Hohlprofil (3c) seitlich neben dem ersten Hohlprofil (3a) und dem zweiten Hohlprofil (3b) angeordnet ist und teilweise das erste Hohlprofil (3a) und das zweite Hohlprofil (3b) überlappt.

7. Kraftsensorvorrichtung (200) nach einem der vorstehenden Ansprüche,
wobei die Hohlprofile (3) jeweils an beiden Hohlprofilenden (31, 32) Anschlussschnittstellen (6) für einen elektrischen Anschluss der Kraftstreifensensoren (1) aufweisen.

8. Kraftsensorvorrichtung (200) nach einem der vorstehenden Ansprüche,
wobei die Kraftstreifensensoren (1) elektrisch parallel oder in Reihe verbunden sind.

9. Kraftsensorvorrichtung (200) nach einem der vorstehenden Ansprüche,
wobei die Hohlprofile (3) durch Rohre, insbesondere durch dünnwandige Rohre, mit einem Kreisquerschnitt oder mit einem viereckigen Querschnitt gebildet sind.

10. Streifensensorvorrichtung (100), mit:
einem längsgestreckten Hohlprofilgehäuse (4); und zumindest einer in dem Hohlprofilgehäuse (4) angeordneten Kraftsensorvorrichtung (200) nach einem der Ansprüche 1 bis 9.

11. Streifensensorvorrichtung (100) nach Anspruch 10,
wobei die längsgestreckte Sensoraufnahme (2) der zumindest einen Kraftsensorvorrichtung (200) sich entlang einer Längsrichtung des Hohlprofilgehäuses (4) erstreckt.

12. Streifensensorvorrichtung (100) nach Anspruch 11, mit:
einem entlang der Längsrichtung des Hohlprofilgehäuses (4) in dem Hohlprofilgehäuse (4) angeordneten Führungselement (8),
wobei die zumindest eine Kraftsensorvorrichtung (200) in dem Führungselement (8) verschiebbar gelagert ist.

13. Streifensensorvorrichtung (100) nach einem der Ansprüche 10 bis 12,
wobei das Hohlprofilgehäuse (4) elastische Randzonen (5) aufweist.

14. Streifensensorvorrichtung (100) nach Anspruch 13,
wobei die elastischen Randzonen (5) des Hohlprofilgehäuses (4) sinusförmige (5.1), U-förmige (5.2) oder rechteckige (5.3) Dehnungsfugen aufweisen.

## Claims

1. Force sensor device (200) for the acquisition of a vehicle weight, with
an elongated sensor holder (2); and
a multiple number of hollow profiles (3) arranged so that they overlap in the elongated sensor holder (2),
whereby a force strip sensor (1) is located in each hollow profile (3) and the overlapping hollow profiles (3) extend in an extension direction (L) of the elongated sensor holder (2), **characterized in that** the hollow profiles partially overlap.

2. Force sensor device (200) in accordance with Claim 1,
whereby the sensitivity of the force strip sensors (1) along the extension direction (L) of the elongated sensor holder (2) is approximately constant.

3. Force sensor device (200) in accordance with Claim 1 or 2,
whereby the sensitivity of the force strip sensors (1) in a radial direction (R) of the elongated sensor holder (2) is irregular.

4. Force sensor device (200) in accordance with Claim 3,
whereby the sensitivity of the force strip sensors (1) in the radial direction (R) of the elongated sensor holder (2) steadily decreases from a center position (b) to a marginal position (a, c).

5. Force sensor device (200) in accordance with any of the above-mentioned Claims,
whereby the force strip sensors (1) are inserted into the hollow profiles (3) and held by a frictional or positive connection.

6. Force sensor device (200) in accordance with any of the above-mentioned Claims,
whereby the multiple number of overlapping hollow profiles (3) has a first hollow profile (3a), a second hollow profile (3b) and a third hollow profile (3c),
whereby first hollow profile (3a) and the second hollow profile (3b) are spaced from each other and are arranged in a row, and
whereby the third hollow profile (3c) is located laterally beside the first hollow profile (3a) and the second hollow profile (3b), and the first hollow profile (3a) and the second hollow profile (3b) partially overlap.

7. Force sensor device (200) in accordance with any of the above-mentioned Claims,
whereby the hollow profiles (3) each have connection interfaces (6) for an electrical connection of the force strip sensors (1) on both hollow profile ends (31, 32).

8. Force sensor device (200) in accordance with any of the above-mentioned Claims,
whereby the force strip sensors (1) are connected electrically in parallel or in series.

9. Force sensor device (200) in accordance with any of the above-mentioned Claims,
whereby the hollow sections (3) are formed by tubes, in particular by thin-walled tubes, with a circular cross-section or with a rectangular cross-section.

10. Strip sensor device (100), with:
an elongated hollow profile housing (4); and at least one force sensor device (200) in accordance with any of Claims 1 to 9 located in the hollow profile housing (4).

11. Strip sensor device (100) in accordance with Claim 10,
whereby the elongated sensor holder (2) of the at least one force sensor device (200) extends along a longitudinal direction of the hollow profile housing (4).

12. Strip sensor device (100) in accordance with Claim 11, with:
a guide element (8) located in the hollow profile housing (4) along the longitudinal direction of the hollow profile housing (4),
whereby the at least one force sensor device (200) is moveably mounted in the guide element (8).

13. Strip sensor device (100) in accordance with any of Claims 10 to 12,
whereby the hollow profile housing (4) has elastic edge zones (5).

14. Strip sensor device (100) in accordance with Claim 13,
whereby the elastic edge zones (5) of the hollow profile housing (4) have sinusoidal (5.1), U-shaped (5.2) or rectangular (5.3) expansion joints.

## Revendications

1. Dispositif de capteur de force (200) pour détecter le poids d'un véhicule, comportant
un logement de capteur de forme allongée (2) ; et
une majorité de profilés creux (3) qui se chevauchent à l'intérieur du logement de capteur allongé (2),
sachant que dans chaque profilé creux (3) est disposé un capteur de force à bande (1) et que les profilés creux (3) se chevauchant s'étendent dans un sens d'allongement (L) du logement de capteur de forme allongée (2), caractérisé en ce sens que les profilés creux se chevauchent partiellement.

2. Dispositif de capteur de force (200) selon la revendication 1,
sachant que les capteurs de force à bande (1) présentent une sensibilité approximativement constante le long du sens d'allongement (L) du logement de capteur de forme allongée (2).

3. Dispositif de capteur de force (200) selon la revendication 1 ou 2,
sachant que les capteurs de force à bande (1) présentent une sensibilité irrégulière dans le sens radial (R) du logement de capteur de forme allongée (2).

4. Dispositif de capteur de force (200) selon la revendication 3,
sachant que la sensibilité des capteurs de force à bande (1) dans le sens radial (R) du logement de capteur de forme allongée (2) diminue de manière constante depuis une position au centre (b) vers une position en bordure (a, c).

5. Dispositif de capteur de force (200) selon l'une des revendications précédentes,
sachant que les capteurs de force à bande (1) sont placés dans les profilés creux (3) et maintenus par conjugaison de forme ou de force.

6. Dispositif de capteur de force (200) selon l'une des revendications précédentes,
sachant que la majorité des profilés creux (3) qui se chevauchent présentent un premier profilé creux (3a), un deuxième profilé creux (3b) et un troisième profilé creux (3c),
sachant que le premier profilé creux (3a) et le deuxième profilé creux (3b) sont disposés en série mais espacés,
et que le troisième profil (3c) est disposé latéralement à côté du premier profilé creux (3a) et du deuxième profilé creux (3b), chevauchant partiellement le premier (3a) et le deuxième profilé creux (3b).

7. Dispositif de capteur de force (200) selon l'une des revendications précédentes,
sachant que les profilés creux (3) présentent à chacune de leurs extrémités (31, 32) des interfaces de raccordement (6) pour un raccordement électrique des capteurs de force à bande (1).

8. Dispositif de capteur de force (200) selon l'une des revendications précédentes,
sachant que les capteurs de force à bande (1) sont reliés électriquement en parallèle ou en série.

9. Dispositif de capteur de force (200) selon l'une des revendications précédentes,
sachant que les profilés creux (3) sont formés de tuyaux, plus particulièrement de tuyaux à parois minces, de section transversale ronde ou carrée.

10. Dispositif de capteur à bande (100), comportant :
un boîtier de profilé de forme allongée (4) ; et au moins un dispositif de capteur de force (200) disposé dans le boîtier de profilé de forme allongée (4) selon l'une des revendications 1 à 9.

11. Dispositif de capteur de force (100) selon la revendication 10,
sachant que le logement de capteur de forme allongée (2) d'au moins un dispositif de capteur de force (200) s'étend le long d'un sens longitudinal du boîtier de profilé de forme allongée (4).

12. Dispositif de capteur de force (100) selon la revendication 11, comportant :
un élément de guidage (8) disposé dans le sens longitudinal du boîtier de profilé de forme allongée (4) dans le boîtier de profilé de forme allongée (4), sachant qu'au moins un dispositif de capteur de force (200) est monté pour se coulisser dans l'élément de guidage (8).

13. Dispositif de capteur de force (100) selon l'une des revendications 10 à 12, sachant que le boîtier de profilé de forme allongée (4) présente des zones élastiques en bordure (5).

14. Dispositif de capteur de force (100) selon la revendication 13,
sachant que les zones élastiques en bordure (5) du boîtier de profilé de forme allongée (4) présentent des joints de dilatation de forme sinusoïdale (5.1), en forme de U (5.2) ou rectangulaires (5.3).
